# EUROPEAN PATENT APPLICATION

(11) **EP 1 895 524 A2**
(43) Date of publication of application: **05.03.2008**
(21) Application number: 07016477.7
(22) Date of filing: 22.08.2007
(51) Int. Cl.: G11B 7/09, G11B 7/135

(54) **Lens moving element and optical disk apparatus**

(30) Priority: 28.08.2006 JP 2006230287
(71) Applicant: Funai Electric Co., Ltd., Daito-shi, Osaka 574-0013 (JP)
(72) Inventor: Kasahara, Takashi, Daito-shi Osaka 574-0013 (JP)
(74) Representative: Grünecker, Kinkeldey, Stockmair & Schwanhäusser Anwaltssozietät

(57) **Abstract**

Disclosed is a lens moving element which comprises a lens (13), a body section comprising a lens holder (14) and a coil holder (15) combined with a lower part of the lens holder, the lens holder (14) supporting the lens (13), coils (16,17) mounted to a periphery of the coil holder (15), a liquid crystal element (19), and a liquid crystal holder (18) combined with a substantially center of a bottom surface of the body section and supporting the liquid crystal element (19) so as to allow the liquid crystal element to be opposed to the lens (13), the coil holder (15) is made of a material that has a higher rigidity than materials of which the lens holder (14) and the liquid crystal holder (18) are made.

## Description

### Technical Field to which the Invention Belongs

The present invention relates to a lens moving element and an optical disk apparatus.

### Related Background Art

An optical disk apparatus is provided with a lens driving device (actuator). In a case where the lens driving device performs a servo control for causing a lens moving element to be slightly driven in a focusing direction and a tracking direction, influence on the servo control, which is exerted by a secondary resonance (unnecessary resonance) which is caused by a resonance in each structure of the lens moving element which the driving of the lens moving element involves, is at stake. That is, if a secondary resonance frequency band and a signal frequency band used for the servo control are close to each other or overlap, the servo control is made unsteady by the effect of the secondary resonance.

Japanese Patent Application Laid-Open Publication No. Hei. 11-66585 discloses an objective lens driving device in which a reinforcing member made of a high rigidity material is affixed to a bobbin to which an objective lens is fixed, to thereby increase the rigidity of a movable portion and raise the secondary resonance frequency of an actuator.
Moreover, Japanese Patent Application Laid-Open Publication Nos. 2005-346832 and 2004-265592 disclose a technology in which a liquid crystal element is carried on an actuator for the purpose of correcting a spherical aberration in an objective lens.

In the objective lens driving device disclosed in Japanese Patent Application Laid-Open Publication No. Hei. 11-66585, the reinforcing member (reinforcing plate) which is a member different from essential members constituting a movable portion of the actuator is added to a structure of the movable portion. Therefore, there is a problem that the number of components required for production of the actuator and the number of man-hours required for the production of the actuator are increased. Moreover, the invention disclosed in Japanese Patent Application Laid-Open Publication No.Hei. 11-66585 aims at increasing the rigidity of the movable portion by causing the reinforcing plate to be affixed to the bobbin, and making the movable portion thin. However, while the reinforcing plate per se is considerably small as compared to the entire bobbin, the addition of the reinforcing plate to the bobbin surely leads to any increase in a thickness of the entire movable portion. Therefore, room for considerable improvements in the manner to increase the rigidity of the movable portion, and thinning of the movable portion has been left.

### Disclosure of the Invention

It is an object of the present invention to provide a lens moving element which does not lead to the need of additional parts and an increase in the number of man-hours required for assembling of the lens moving element, facilitates thinning of a product, and can cause the frequency of a secondary resonance caused at the time of driving of a lens to be accurately shifted toward higher frequencies, and an optical disk apparatus which carries such a lens moving element.

In accordance with an aspect of the present invention, there is provided a lens moving element comprising a lens, a body section comprising a lens holder and a coil holder combined with a lower part of the lens holder, the lens holder supporting the lens at a substantially center of an upper surface of the lens holder, coils mounted to a periphery of the coil holder, a liquid crystal element, and a liquid crystal holder combined with a substantially center of a bottom surface of the body section and supporting the liquid crystal element to allow the liquid crystal element to be opposed to the lens.
The coil holder is made of a material that has a higher rigidity than materials of which the lens holder and the liquid crystal holder are made.

According to the present invention, the coil holder per se which is one of the members constituting the body section of the lens moving element and to which the coils are mounted, is made of the material which has the higher rigidity than the materials of which the lens holder and the liquid crystal holder are made. Therefore, it is possible to enhance the rigidity of the lens moving element without leading to changes in the number of man-hours to assemble the lens moving element and the number of the components, and an increase in a thickness of the lens moving element. The rigidity of the lens moving element is increased in this way and, consequently, the frequency of a secondary resonance caused at the time that the lens moving element is driven can be shifted toward higher frequencies as compared to the conventional lens moving element.
Incidentally, the coil holder may be made of a magnesium alloy, and the lens holder and the liquid crystal holder may be made of resin. To the end, the part of the lens moving element is made of the magnesium alloy, so that the production cost of the lens moving element can be reduced as compared to a case where the entire lens moving element is made of the magnesium alloy.

Another optional aspect of the present invention, the coil holder occupies substantially two-third from under of the body section. That is, a region which occupies a large part of the body section supporting all of the lens, the coils, and the liquid crystal holder, and a substantially center of the entire lens moving element, is made of a high rigidity material. Consequently, the entire rigidity of the lens moving element is enhanced and the secondary resonance frequency is easily shifted toward higher frequencies.

### Brief Description of the Drawings

Fig. 1 is a block diagram of one example of a schematic structure of an optical disk apparatus;
Fig. 2 is a schematic upper perspective view of one example of an objective lens moving element; and
Fig. 3 is a schematic side view of the objective lens moving element.

### Description of Special Embodiments

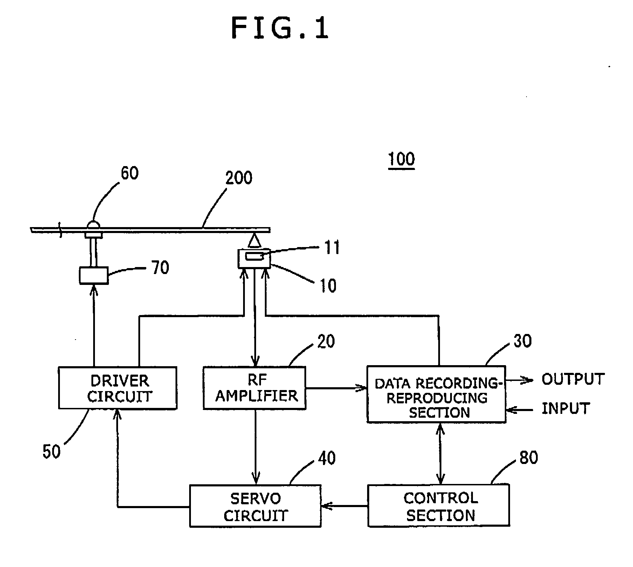

An embodiment of the present invention will be discussed hereinafter with reference to the accompanying drawings.
Referring to Fig. 1, there is illustrated a schematic structure of an optical disk apparatus 100. The optical disk apparatus 100 comprises an optical pickup 10, an RF amplifier 20, a data recording-reproducing section 30, a servo circuit 40, a driver circuit 50, a turntable 60, a spindle motor 70, a control section 80, and the like. The optical disk apparatus 100 is adapted to cause a data to be recorded in an optical disk 200 arranged on the turntable 200, by causing a laser beam to be irradiated to the optical disk 200, and read out the data recorded in the optical disk 200.

The optical pickup 10 is provided with an actuator 11 and further includes a laser diode, a collimator lens, a photodetector, and the like which are not shown.
The actuator 11 is a device including an objective lens moving element. The objective lens moving element is adapted to self-move while holding an objective lens. The actuator 11 is adapted to cause the objective lens moving element to be slightly driven in an optical axis direction (a focusing direction) of the laser beam irradiated to the optical disk 200, and adapted to cause the objective lens moving element to be moved in a radial direction (a tracking direction) of the optical disk 200.

The optical pickup 10 is adapted to irradiate the laser beam, emitted from the laser diode, to the optical disk 200 through the collimator lens and the objective lens, and cause a reflected light from the optical disk 200 to be converted into an electrical signal by the photodetector, to thereby optically read out the information recorded in the optical disk 200. The photodetector is adapted to output an electrical signal from a light receiving region to the RF amplifier 20. On the other hand, when a record data is inputted from the data recording-reproducing section 30, the optical pickup 10 is adapted to irradiate a laser beam, which is modulated according to the record data, to a recording surface of the optical disk 200.

The data recording-reproducing section 30 is adapted to reproduce the information as a digital data in a predetermined format (MPEG2 format, etc.) by causing a signal outputted from the RF amplifier 20 to be subjected to a demodulation processing, an error detecting-correcting processing, etc., and output a necessary image, etc. to the outside based on a display output command inputted from the control section 80. Moreover, when a record data is inputted from a television broadcast receiving section or external equipment, etc- (not shown), the data recording-reproducing section 30 is adapted to convert the record date into an RF signal and output the RF signal to the optical pickup 10 as discussed above. The control section 80 is consisted of, for example, a CPU, a ROM, in which programs for performing various commands are memorized, etc., and is adapted to carry out the control of the entire optical apparatus 100.

The RF amplifier 20 is adapted to amplify the signal outputted by the optical pickup 10, output the amplified signal to the data recording-reproducing section 30, generate a focusing error signal (FE) and a tracking error signal (TE), and output them to the servo circuit 40.
The servo circuit 40 is adapted to generate a focusing drive signal for making a value of the FE 0 (a reference level) based on the FE and a tracking drive signal for making a value of the TE 0 (a reference level) based on the TE, and output them to the driver circuit 50. The servo circuit 40 is adapted to generate a spindle motor driving signal for causing the number of revolutions of the optical disk 200 to be a target value, on the basis of a signal which is outputted by the data recording-reproducing section 30 and indicative of the number of revolutions of the optical disk 200, and output the spindle motor driving signal to the drive circuit 50.

The driver circuit 50 is adapted to drive the actuator 11 in the optical pickup 10 based on the focusing drive signal and the tracking drive signal. That is, the driver circuit 50 causes the actuator 11 to carry out a servo control by causing the objective lens moving element to be slightly driven on the basis of the focusing drive signal and the tracking drive signal. By such a processing, it is possible to cause the laser beam irradiated from the objective lens to follow a record track of the optical disk 200, and cause a focus of the laser beam to be focused on the record track.
The driver circuit 50 is adapted to drive, based on the spindle motor driving signal, the spindle motor 70 which causes the turntable 60 having the optical disk 200 carried thereon to be rotated at predetermined revolutions.

Moreover, the optical disk apparatus 100 is provided with a guide rail (not shown) which extends in the radial direction of the optical disk 200. The optical pickup 10 is threadedly engaged with the guide rail. The optical disk apparatus 100 can cause the optical pickup 10 to be moved in the radial direction of the optical disk 200 as the guide rail is rotated. The guide rail is designed so as to be capable of being rotated by a stepping motor. That is, the servo circuit 40 is adapted to generate a traverse driving signal for causing the optical pickup 10 to be moved to a predetermined position, on the basis of a seek control signal outputted from the control section 80, and output the traverse driving signal to the driver circuit 50. Then, the traverse driving signal is outputted to the stepping motor from the driver circuit 50, whereby the stepping motor causes the guide rail to be rotated.

In the optical disk apparatus constructed as discussed above, there is a problem that a secondary resonance, which is caused according to the servo control, adversely affects the focusing drive signal (a kind of servo control signal) and the tracking drive signal (a kind of servo control signal) and, consequently, the servo control is made unstable.
Accordingly, in the embodiment according to the present invention, the following features are added to the objective lens moving element which constitutes a part of the actuator 11, to thereby solve the above-mentioned problem.

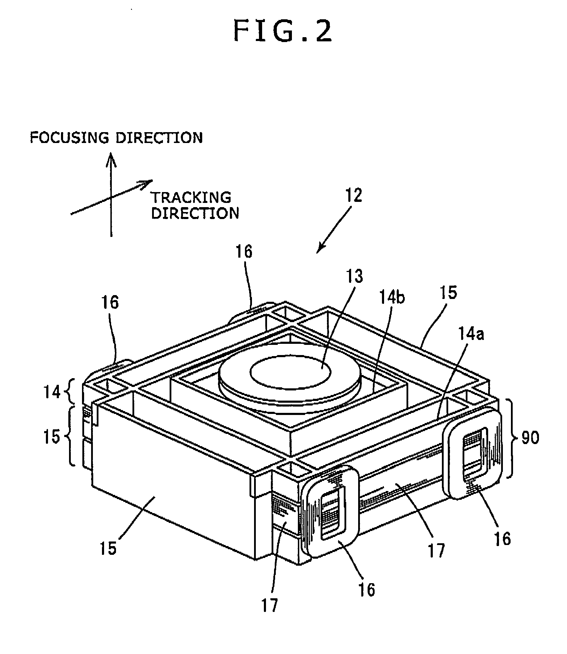

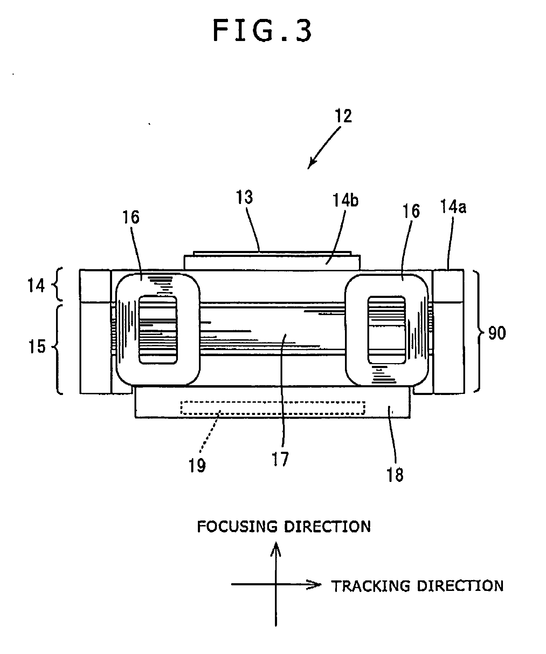

Fig. 2 is a schematic upper perspective view of the objective lens moving element 12. Fig. 3 is a schematic side view of the objective lens moving element 12.
As discussed above, the objective lens moving element 12 constitutes the part of the actuator 11. The actuator 11 is constructed by causing a conventional yoke and a magnet as well as the objective lens moving element 12 to be arranged on a member serving as a base. Since the present invention is directed to structural features of the objective lens moving element 12, constructions of elements other than the objective lens moving element 12 which constitute the actuator 11 will not be shown and described.

The objective lens moving element 12 comprises, as its main components, an objective lens 13, a lens holder 14, a coil holder 15, tracking coils 16, a focusing coil 17, a liquid crystal holder 18 and a liquid crystal element 19. The lens holder 14 and the coil holder 15 constitute a body section 90 of the objective lens moving element 12. The lens holder 14 is a member constituting an upper portion of the body section 90. The lens holder 14 comprises a frame portion 14a having a substantially rectangular peripheral shape, and a lens supporting portion 14b provided on the frame portion 14a so as to be disposed at a center part of an upper surface of the frame portion 14a and including a peripheral surface having a height higher than a height of a peripheral surface of the frame portion 14a. The lens supporting portion 14b serves as a part to support the objective lens 13. The lens supporting portion 14b supports the objective lens 13 with a substantially center part thereof being positioned with respect to an optical axis of the objective lens 13. The objective lens 13 is opposed to the optical disk 200 and serves to cause the laser beam to be collected onto the surface of the optical disk 200.

The coil holder 15 is combined with a lower part of the frame portion 14a of the lens holder 14. The coil holder 15 has a peripheral shape, which substantially corresponds to the peripheral shape of the frame portion 14a, and is formed so as to have a size occupying a substantially two-third lower part of the body section 90. Moreover, the coil holder 15 is provided with the tracking coils 16 and the focusing coil 17. More particularly, the focusing coil 17 is wound around a periphery of the coil holder 15 so as to surround four side surfaces of the periphery of the coil holder 15. The focusing coil 17 is wound around a substantially vertical middle area of the periphery of the body section 90. Regions of the side surfaces of the coil holder 15 around which the focusing coil 17 is wound are formed so as to be made concave toward a center of the body section 90 rather than other regions of the side surfaces of the coil holder 15. By passing an electrical current through the focusing coil 17 according to the focusing drive signal, the focusing coil 17 is adapted to generate a driving force in the focusing direction, whereby the objective lens moving element 12 is driven in the focusing direction.

Two tracking coils 16 are fixed to each of two of the side surfaces of the body section 90 which are opposite to each other in such a direction as to be perpendicular to the tracking direction. Each tracking coil 16 is coiled into a substantially rectangular shape. Each tracking coil 16 is fixed to a corresponding side surface of the body section 90 so as to be disposed outside rather than the focusing coil 17, with a coiled direction thereof being substantially parallel to the side surface of the body section 90. By passing an electrical current through the tracking coils 16 according to the tracking drive signal, the tracking coils 16 are each adapted to generate a driving force in the tracking direction, whereby the objective lens moving element 12 is driven in the tracking direction. The coil holder 15 occupies substantially whole of two side surfaces of the body section 90 that the tracking coils 16 are not fixed.

As shown in Fig. 3, the liquid crystal holder 18 is combined with a bottom surface of the coil holder 15. The liquid crystal holder 18 is provided at a substantially center part of the bottom surface of the coil holder 15. The liquid crystal holder 18 has the liquid crystal element 19 (shown in chain-lines in Fig. 3) held at a substantially center location thereof. The objective lens moving element 12 has a space which penetrates through an interior of the objective lens moving element 12 in the focusing direction. The objective lens 13 and the liquid crystal element 19 are opposed to each other so as to interpose the space therebetween. The liquid crystal element 19 serves as an aberration correcting means for correcting an aberration such as a spherical aberration, etc. which is caused by the objective lens 13.

In the illustrated embodiment of the present invention, of the respective members constituting the objective lens moving element 12, the coil holder 15 is made of a material which has a higher rigidity than materials of which the lens holder 14 and the liquid crystal holder 18 are formed. For example, the lens holder 14 and the liquid crystal holder 18 may be made of resin, and the coil holder 15 only may be made of a magnesium alloy which has a higher rigidity than the resin.
In this way, the coil holder 15 only is made of the material which has a higher rigidity than the materials of which the other members are made, thus making it possible to increase the entire rigidity of the objective lens moving element 12. Consequently, the secondary resonance frequency is shifted toward higher frequencies.

Particularly, in the illustrated embodiment, the coil holder 15 which occupies a great part of a substantially center of the entire objective lens moving element 12 and also occupies at the side surfaces thereof a large part of the side surfaces of the objective lens moving element 12 is made higher in rigidity than the other members. Therefore, it is possible to increase the entire rigidity of the objective lens moving element 12. Consequently, it is possible to cause the secondary resonance frequency to be positively shifted toward higher frequencies. By causing the secondary resonance frequency to be shifted toward the higher frequencies, a secondary resonance frequency band is shifted toward the higher frequencies as compared to the servo signals such as the focusing drive signal and the tracking drive signal. Consequently, it is possible to prevent the servo control from being made unstable by the effect of the secondary resonance.

A conventional objective lens moving element A in which all of a lens holder 14, a coil holder 15 and a liquid crystal holder 18 are made of resin, and the objective lens moving element B according to the embodiment of the present invention, were prepared. Then, the frequency of a secondary resonance caused in the objective lens moving element A and the frequency of a secondary resonance caused in the objective lens moving element B were measured. The measured results will be discussed hereinafter.
A value of a focusing resonance frequency (the frequency of a secondary resonance caused at the time that the objective lens moving element is driven in the focusing direction) which was measured in the case where the moving element A was used, was 20.6 kHz, whereas a value of the focusing resonance frequency which was measured in the case where the moving element B was used, was 36.6 kHz. Moreover, a value of a tracking resonance frequency (the frequency of a secondary resonance caused at the time that the objective lens moving element is driven in the tracking direction) which was measured in the case where the moving element A was used, was 20.1 kHz, whereas a value of the tracking resonance frequency which was measured in the case where the moving element B was used, was 37.5 kHz.

As seen from what has been discussed above, when the objective lens moving element 12 according to the present invention is employed, it is possible to cause the secondary resonance frequency to be shifted toward higher frequencies. Incidentally, if it is viewed that the servo control signal is about 5 kHz to 20 kHz, it is declared that it is possible to cause the secondary resonance frequency to be positively shifted toward higher frequencies as compared to the servo control signal frequency, by employing the objective lens moving element 12 according to the present invention.

Moreover, in the embodiment of the present invention, the coil holder 15 per se which is one of the essential components constituting the objective lens moving element 12 is made of the high rigidity material, so that the number of the components constituting the objective lens moving element 12 is not increased at all as compared to the conventional objective lens moving element A. Therefore, it is possible to prevent the increase in the number of the man-hours required for assembling of the objective lens moving element, which is brought about by the increase in the number of the components, and it is possible to prevent the unsteadiness of the servo control which is caused by the effect of the secondary resonance.
Moreover, no increase at all in the number of the components constituting the objective lens moving element 12 according to the present invention means that the size of the objective lens moving element as a product is not changed. Therefore, according to the present invention, the small-sization of the product and making of the product slim can be achieved, as compared with the case where the adverse effect caused by the secondary resonance is restrained by adding the member which is different from the essential components constituting the objective lens moving element, in addition to the essential components.

Taking the above-mentioned structure into account and according to the present invention, there is provided an optical disk apparatus carrying a lens moving element, the lens moving element comprising, a lens for causing a laser beam to be collected onto a surface of an optical disk, a body section having a substantially rectangular peripheral shape, the body section comprising a lens holder and a coil holder combined with a lower part of the lens holder, the lens holder comprising a frame portion having a substantially rectangular peripheral shape, and a lens supporting portion provided on an upper surface of the frame portion and formed to have a height more than a height of the frame portion, the lens supporting portion supporting the lens with a substantially center part positioned with respect to an optical axis of the lens, a focusing coil wound around side surfaces of the coil holder, two tracking coils fixed to each of two of the side surfaces of the body section that are opposite to each other and perpendicular to a tracking direction, the two tracking coils are disposed outside rather than the focusing coil, a liquid crystal element, and a liquid crystal holder combined with a bottom surface of the body section and supporting the liquid crystal element to allow the liquid crystal element to be opposed to the lens in a focusing direction, the lens holder and the liquid crystal holder are made of resin, the coil holder is made of a magnesium alloy that has a higher rigidity than the resin, and the coil holder occupies substantially two-third from under of the body section and occupies substantially whole of two side surfaces of the body section that the tracking coils are not fixed.
That is, a concrete product which is as the optical disk apparatus exhibits the operation and effects in the same manner as the above-mentioned objective lens moving element does.

While the invention has been particularly shown and described with respect to a preferred embodiment thereof, it should be understood by those skilled in the art that the foregoing and other changes in form and detail may be made therein without departing from the spirit and scope of the invention as defined in the appended claims.

## Claims

1. An optical disk apparatus carrying a lens moving element, the lens moving element comprising:
a lens for causing a laser beam to be collected onto a surface of an optical disk;
a body section having a substantially rectangular peripheral shape;
the body section comprising a lens holder and a coil holder combined with a lower part of the lens holder;
the lens holder comprising a frame portion having a substantially rectangular peripheral shape, and a lens supporting portion provided on an upper surface of the frame portion and formed to have a height more than a height of the frame portion;
the lens supporting portion supporting the lens with a substantially center part positioned with respect to an optical axis of the lens;
a focusing coil wound around side surfaces of the coil holder;
two tracking coils fixed to each of two of the side surfaces of the body section that are opposite to each other and perpendicular to a tracking direction;
the two tracking coils are disposed outside rather than the focusing coil;
a liquid crystal element; and
a liquid crystal holder combined with a bottom surface of the body section and supporting the liquid crystal element to allow the liquid crystal element to be opposed to the lens in a focusing direction;
the lens holder and the liquid crystal holder are made of resin;
the coil holder is made of a magnesium alloy that has a higher rigidity than the resin; and
the coil holder occupies substantially two-third from under of the body section and occupies substantially whole of two side surfaces of the body section that the tracking coils are not fixed.

2. A lens moving element comprising:
a lens;
a body section comprising a lens holder and a coil holder combined with a lower part of the lens holder;
the lens holder supporting the lens at a substantially center of an upper surface of the lens holder;
coils mounted to a periphery of the coil holder;
a liquid crystal element; and
a liquid crystal holder combined with a substantially center of a bottom surface of the body section and supporting the liquid crystal element to allow the liquid crystal element to be opposed to the lens;
the coil holder is made of a material that has a higher rigidity than materials of which the lens holder and the liquid crystal holder are made.

3. A lens moving element according to claim 2, wherein the coil holder is made of a magnesium alloy, and the lens holder and the liquid crystal holder are made of resin.

4. A lens moving element according to any of claims 2 or 3, wherein the coil holder occupies substantially two-third from under of the body section.
